# EUROPEAN PATENT SPECIFICATION

(11) **EP 4 113 012 B1**
(45) Date of publication and mention of the grant of the patent: **28.06.2023**
(21) Application number: 21183086.4
(22) Date of filing: 01.07.2021
(51) Int. Cl.: F24D 3/10, F24D 19/10, F28F 21/06, F28F 9/02, F28F 27/02

(54) **HEATING/COOLING SYSTEM MANIFOLD**
HEIZ-/KÜHLSYSTEMVERTEILER
COLLECTEUR DE SYSTÈME DE CHAUFFAGE/REFROIDISSEMENT

(43) Date of publication of application: 04.01.2023
(73) Proprietor: Danfoss A/S, 6430 Nordborg (DK)
(72) Inventor: HESSELDAHL, Søren, 6430 Nordborg (DK); NIELSEN, Peter Gammeljord, 6430 Nordborg (DK); CLAUSEN, Anders Østergaard, 6430 Nordborg (DK); BRIX NIELSEN, Martin, 6430 Nordborg (DK)
(74) Representative: Keil & Schaafhausen Patentanwälte PartGmbB

(56) References cited:
- EP-A1- 1 426 695
- EP-A1- 1 426 696
- EP-A1- 1 741 991
- DE-A1- 3 043 422
- DE-U1- 29 716 779

## Description

The present invention relates to a heating/cooling system manifold comprising a sleeve having at least one opening in a circumferential wall and fixing means having a connection geometry for fixing a functional part of the system to the sleeve and being arranged around the opening.

Such a manifold is known, for example, from EP 1 426 695 A1. The fixing means comprises two parts in form of tubular metal elements which are inserted into opposing openings in the tube and are connected to each other by means of a screw connection. The sleeve is made from a plastic material. When the parts of the fixing means are connected, they have to be rotated which can be detrimental for O-rings which are used to form a sealing between the parts of the fixing means and the sleeve.

The object underlying the invention is to facilitate mounting of a manifold for a heating/cooling system.

This object is solved with a heating/cooling system manifold as described at the outset in that the sleeve is made from a heat resistant material and the fixing means comprise at least two parts made of a plastic material which are connected by a welding seam.

The two parts of the fixing means are made of a plastic material which can be welded. For the welding connection it is only necessary to heat the plastic parts at least in the area at which they contact each other, for example by ultra-sonic heating. When the parts of the fixing means are pressed together, they are welded together and form a welding seam. This kind of connection does not require a rotational movement. It is only necessary to press the two parts together. Heating of the plastic parts is possible, since the sleeve is made of a heat resistant material, preferably a metal material. The plastic material of the parts of the fixing means can be a polymer or a composite material comprising, for example, fiberglass or carbonfiber.

In an embodiment of the invention the welding seam is arranged outside the sleeve. This has two advantages. The region of the parts to be connected is accessible from the outside, so that the heating of the parts in this region is facilitated. Furthermore, it is possible to inspect the welding seam after the parts have been connected. The heating of the parts in the region of the welding seam can be performed, for example, by an ultra-sonic heating.

In an embodiment of the invention the parts of the fixing means surround the circumference of the sleeve over more than 200°, in particular surround completely the sleeve. Thus, the parts of the fixing means are held by a form fit or positive fit around the sleeve.

In an embodiment of the invention an area around the at least one opening is completely covered by a first part of the fixing means. This has the consequence that any functional part of the system, for example a part of a valve, a sensor, or the like, is fixed in only a single part. Furthermore, sealing of the opening is not very complicated, since only two parts have to be sealed against each other, i.e. the first part and the sleeve.

In an embodiment of the invention the first part comprises a shoulder surrounding the at least one opening, wherein the shoulder comprises a groove in which an O-ring is arranged. The shoulder hat two functions. One function is to hold the O-ring. The other function is to form a stop when the parts of the fixing means are pressed against each other to form the welding seam. The shoulder defines the final position of the first part with respect to the sleeve. The sleeve has small tolerances in the magnitude of tenth millimetres. Furthermore, the sleeve can be slightly irregularly, i.e. deviate from a desired form, for example a circular cross section. The parts of the fixing means can be used to compensate for the tolerances. When they are pressed together to form the welding seam the length of the parts of the fixing means in the pressing direction can be varied by the magnitude of the tolerances.

In an embodiment of the invention the at least one opening is a first opening and the sleeve comprises at least one second opening opposite the first opening, wherein the fixing means comprise a second part and area surrounding the second opening is completely covered by the second part. Here, the same advantages can be achieved as with the first part and the first opening.

In an embodiment of the invention the second part comprises a shoulder surrounding the second opening, wherein the shoulder comprises a groove in which an O-ring is arranged. Again, the shoulder has two functions. The first function is to hold the O-ring to establish a seal between the second part and the sleeve. The other function is to form a stop for the movement of the parts of the fixing means when they are pressed together.

In an embodiment of the invention at least one functional part of the manifold is mounted in the fixing means and held in the fixing means by means of a U-shaped fixing element inserted into the fixing means and engaging a recess in the functional part. Thus, the functional part, for example, a valve part, a sensor, an air-out element, a pre-setting part or the like, can simply be inserted into the fixing means and mounted there without any rotational movement. It is only necessary to press the fixing element into the fixing means so that parts of the fixing elements come into engagement with the functional part.

In an embodiment of the invention at least an O-ring is arranged between the functional part and the fixing means. In this way, a sealing is formed between the functional part and the fixing means.

In an embodiment of the invention the fixing element comprises legs which are parallel to a tangent to the circumference of the sleeve. Thus, the fixing element is not moved parallel to the lengthwise extension of the sleeve, but perpendicular or substantially perpendicular to this direction. This facilitates the mounting of the fixing element.

In an embodiment of the invention in a region of the welding seam the fixing means have in a direction parallel to a lengthwise extension of the sleeve an extension which is smaller than in a region of the opening. Thus, the fixing means need only few materials. The construction can be made with low weight and mass.

In an embodiment at least one end of the sleeve forms an end opening and an end part is inserted into the end opening and fixed to the sleeve. When both ends of the sleeves are open, each end can form an end opening accommodating an end part. The end parts in the two ends can be different. This is a simple way to produce a sleeve with low costs. The sleeve can be made by cutting a tube in the desired length.

In an embodiment of the invention the end part comprises an O-ring and is fixed to the sleeve by means of an U-shaped fixing member having two legs, the legs being guided through holes in the sleeve and engaging the end part on a side of the O-ring opposite an inner space of the sleeve. Thus, although the sleeve has holes, there is no risk of a leakage, since these holes are arranged in a region which is not contacted by a fluid in the inner space of the sleeve.

In an embodiment of the invention the fixing means comprise a protrusion protruding into the sleeve. This protrusion can be used to accommodate a functional part of the manifold. It can also be used as functional part of the manifold. The protrusion facilitates positioning of the parts of the fixing means.

In an embodiment of the invention a valve seat or another counterpart of the functional part is formed at one of the parts of the fixing means. The fixing means can have parts protruding in an inner space of the sleeve, so that a part of the fixing means can be used to fulfil more than only the function of fixing, for example having the function of a part of a valve. This makes the assembly of the manifold simple.

A preferred embodiment of the invention will now be described with reference to the drawing, in which:
- Fig. 1: shows a part of a manifold having fixing means,
- Fig. 2: shows a sectional view of the part shown in Fig. 1,
- Fig. 3: shows a sleeve with a first embodiment of an end part,
- Fig. 4: shows a sleeve with a second embodiment of an end part and
- Fig. 5: shows a sleeve with a third end part.

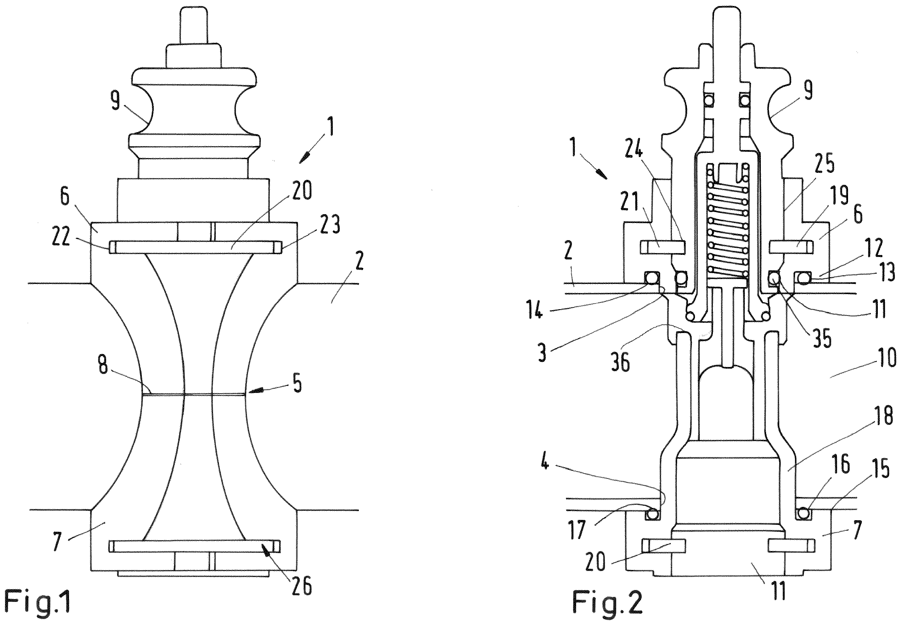

Fig. 1 shows a manifold 1 of a heating/cooling system from the outside. The manifold 1 comprises a sleeve 2 which is made from a metal material. The sleeve 2 has a circular cross section and comprises a first opening 3 in a circumferential wall. A second opening 4 is provided opposite the first opening 3, i.e. the first opening 3 and the second opening 4 have the same central axis. It is preferred, but not absolutely necessary, that the first opening 3 and the second opening 4 are of the same size. Furthermore, the second opening 4 can be omitted.

The manifold 1 comprises fixing means 5. The fixing means 5 comprise a first part 6 and a second part 7. The two parts 6, 7 are made of a plastic material, for example a polymer or a composite material having in addition fiberglass or carbonfibers, and are welded together, i.e. they are connected by a welding seam 8. As can be seen in particular in Fig. 1, the fixing means 5 have in the region of the welding seam 8, in a direction parallel to a lengthwise extension of the sleeve 2, an extension which is smaller than in the region of the two openings 3, 4.

In the embodiment shown in Fig. 1 the welding seam 8 extends in a direction substantially parallel to a longitudinal direction of the sleeve 2, briefly "horizontal". It is, however, also possible to form the welding seam 8 in another direction, for example, in a direction parallel to a diameter of the sleeve 2, briefly "vertical". In this case the parts 6, 7 of the fixing means 5 overlap each other in the circumferential direction of the sleeve 2 and are pressed together in axial direction of the sleeve 2. In this case the length of the welding seam 8 can be somewhat larger. It is also possible to arrange the welding seam 8 at an angle between "horizontal" and "vertical"

A functional part 9 of the manifold 1 is fixed to the first part 6 of the fixing means 5. In the embodiment shown in Fig. 1 and 2 the functional part 9 is a part of a valve controlling a flow of fluid from an inner space 10 of the sleeve 2 to an outlet 11 which is formed in the second part 7 of the fixing means 5. However, other functional parts can be used. Functional parts can be, for example, a sensor, an air-out, a fluid-out, a fluid-in, a plug to close an opening, and the like.

The first part 6 comprises a protrusion 11 which is inserted into the first opening 3. Furthermore, the first part 6 comprises a shoulder 12. The shoulder 12 forms a groove 13 in which an O-ring 14 is arranged. In the same way, the second part 7 comprises a shoulder 15 having a groove 16 in which an O-ring 17 is arranged.

The first O-ring 14 surrounds the first opening 3 and the second O-ring 17 surrounds the second opening 4.

The sleeve 2 can have small tolerances in the magnitude of a tenth millimetres. Furthermore, it is possible that the form of the sleeve 2 deviates from a desired form. When the desired form is a circular cross section, it is possible that the sleeve 2 has a slightly elliptic cross section. These tolerances can be compensated by the parts 6, 7 of the fixing means 5.

When the parts 6, 7 of the fixing means are mounted to the sleeve, the first part 6 is mounted at the first opening 3, i.e. the protrusion 11 is inserted into the first opening 3. The second part 7 has also a protrusion 18 which is inserted into the second opening 4. The ends of the first part 6 and the second part 7 facing each other are heated, for example by an ultra-sonic heating and the parts 6, 7 are pressed together. During this pressing the parts 6, 7 are welded together and a small amount of the material of the parts 6, 7 can be displaced until the shoulders 12, 15 come to rest against the sleeve 2. In this way it is possible to define precisely the position at which the two parts 6, 7 of the fixing means 5 are mounted to the sleeve 2. Furthermore, the shoulders 12, 15 prevent an over pressing of the O-rings 14, 17.

The protrusion can bear a valve seat 36 cooperating with the part of the valve of the functional part 9. The protrusion can also provide another counterpart of the functional part 9.

The functional part 9 is held in the first part 6 by means of a fixing element 19 having a base 20 (Fig. 1) and two legs 21. The first part 6 comprises two holes 22, 23 through which the legs 21 of the fixing element can be inserted. The functional part 9 has corresponding recesses 24, 25 in which the legs 21 of the fixing element 19 engage, so that the functional part 9 is reliably held in the first part 6. An O-ring 35 is arranged between the functional part 9 and the first part 6.

A corresponding fixing element 26 is provided in the second part 7 of the fixing means 5.

Each opening 3, 4 is provided with a single part only, i.e. the first opening 3 with the first part 6 and the second opening 4 with the second part 7. Thus, the O-rings 14, 17 form a sealing only between two parts.

It should be noted that the side of the shoulders 12, 15 facing the sleeve 2 can be rounded to correspond to the outer form of the sleeve 2.

Since the fixing elements 19, 26 can be mounted from the side of the sleeve 2, i.e. substantially perpendicular to the lengthwise extension of the sleeve 2, the sleeve 2 is not an obstacle when the fixing elements 19, 26 are pushed into the openings 22, 23.

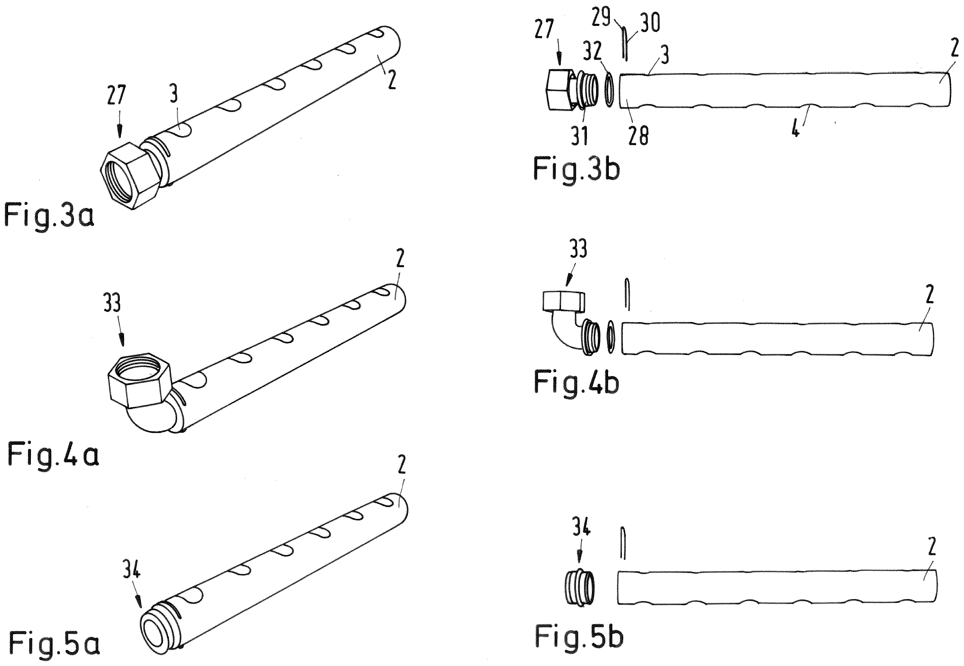

Fig. 3 to 5 show the sleeve 2 with different end parts.

Fig. 3 shows the sleeve 2 having the first opening 3 and the second opening 4. It can be seen that there are a number of first openings 3 (in the upper side of the sleeve 2) and a corresponding number of second openings 4 (in the lower side of the sleeve 2).

The sleeve 2 is in form of a tube, the tube having two end openings. It is also possible that the tube has only one end opening and is closed at the other end. Fig. 3a shows the sleeve 2 in which the left end opening is provided with an end part 27 in form of a straight connector. Fig. 3b shows the sleeve 2 separated from the end part 27.

The sleeve 2 comprises two sets of holes 28 near the end (the left end in Fig. 3b). Only one set of holes 28 is visible. Furthermore, a fixing member 29 having two legs 30 is provided. The legs 30 can be inserted into the holes 28.

The end part 27 comprises a groove 31. Furthermore, an O-ring 32 is provided which can be arranged on the end part 27 on the side of the groove facing the inner space of the sleeve 2. When the end part 27 is then inserted into the end opening of the sleeve 2, the O-ring 32 seals the inner space of the sleeve 2 from the groove 31. The fixing member 29 can be inserted into the holes 28 and the legs 30 come into engagement with the groove 31. Thus, the end part 27 is reliably held in the sleeve 2 and the O-ring 32 guarantees the necessary tightness.

Fig. 4 shows an end part 33 in form of an angle connector and Fig. 5 shows an end part 34 in form of a manifold extender or a coupling. A further end part in form of an end plaque is not shown.

## Claims

1. Heating/cooling system manifold (1) comprising a sleeve (2) having at least one opening (3, 4) in a circumferential wall and fixing means (5) having a connection geometry (23, 24) for fixing a functional part (9) of the system to the sleeve (2) and being arranged around the opening (3, 4), **characterized in that** the sleeve (2) is made from a heat resistant material and the fixing means (5) comprise at least two parts (6, 7) made of a plastic material which are connected by a welding seam (8).

2. Manifold according to claim 1, **characterized in that** the welding seam (8) is arranged outside the sleeve (2).

3. Manifold according to claim 1 or 2, **characterized in that** the parts (6, 7) of the fixing means (5) surround the circumference of the sleeve (2) over more than 200°, in particular surround completely the sleeve (2).

4. Manifold according to any of claims 1 to 3, **characterized in that** an area around the at least one opening (3) is completely covered by a first part (6) of the fixing means (5).

5. Manifold according to claim 4, **characterized in that** the first part (6) comprises a shoulder (12) surrounding the at least one opening (3), wherein the shoulder (12) comprises a groove (13) in which an O-ring (14) is arranged.

6. Manifold according to any of claims 1 to 5, **characterized in that** the at least one opening is a first opening (3) and the sleeve comprises at least one second opening (4) opposite the first opening (3), wherein the fixing means (5) comprise a second part (7) and an area surrounding the second opening (4) is completely covered by the second part (7).

7. Manifold according to claim 6, **characterized in that** the second part (7) comprises a shoulder (15) surrounding the second opening (4), wherein the shoulder (15) comprises a groove (16) in which an O-ring (17) is arranged.

8. Manifold according to any of claims 1 to 7, **characterized in that** at least one functional part (9) of the manifold (1) is mounted in the fixing means (5) and held in the fixing means (5) by means of a U-shaped fixing element (19, 26) inserted into the fixing means (5) and engaging a recess (24, 25) in the functional part (9).

9. Manifold according to claim 8, **characterized in that** at least an O-ring (35) is arranged between the functional part (9) and the fixing means (5).

10. Manifold according to claim 8 or 9, **characterized in that** the fixing element (19, 26) comprises legs (21) which are parallel to a tangent to the circumference of the sleeve (2).

11. Manifold according to any of claims 1 to 10, **characterized in that** in a region of the welding seam (8) the fixing means (5) have in a direction parallel to a lengthwise extension of the sleeve (2) an extension which is smaller than in a region of the opening (3, 4).

12. Manifold according to any of claims 1 to 11, **characterized in that** at least one end of the sleeve (2) forms an end opening and an end part (27, 33, 34) is inserted into the end opening and fixed to the sleeve (2).

13. Manifold according to claim 12, **characterized in that** the end part comprises an O-ring (32) and is fixed to the sleeve by means of an U-shaped fixing member (29) having two legs (30), the legs being guided through holes (28) in the sleeve (2) and engaging the end part on a side of the O-ring (32) opposite an inner space of the sleeve (2).

14. Manifold according to any of claims 1 to 13, **characterized in that** the fixing means (5) comprise a protrusion (11, 18) protruding into the sleeve (2).

15. Manifold according to any of claims 1 to 14, **characterized in that** a valve seat (36) or another counterpart of the functional part (9) is formed at one of the parts (6, 7) of the fixing means (5).

## Patentansprüche

1. Heiz-/Kühlsystemverteiler (1) mit einer Hülse (2), die mindestens eine Öffnung (3, 4) in einer Umfangswand aufweist, und mit einer Befestigungseinrichtung (5), die eine Anschlussgeometrie (23, 24) zur Befestigung eines Funktionsteils (9) des Systems an der Hülse (2) aufweist und um die Öffnung (3, 4) herum angeordnet sind, **dadurch gekennzeichnet, dass** die Hülse (2) aus einem hitzebeständigen Material besteht und die Befestigungseinrichtung (5) mindestens zwei Teile (6, 7) aus einem Kunststoffmaterial aufweist, die durch eine Schweißnaht (8) verbunden sind.

2. Verteiler nach Anspruch 1, **dadurch gekennzeichnet, dass** die Schweißnaht (8) außerhalb der Hülse (2) angeordnet ist.

3. Verteiler nach Anspruch 1 oder 2, **dadurch gekennzeichnet, dass** die Teile (6, 7) der Befestigungseinrichtung (5) den Umfang der Hülse (2) über mehr als 200° umschließen, insbesondere die Hülse (2) vollständig umschließen.

4. Verteiler nach einem der Ansprüche 1 bis 3, **dadurch gekennzeichnet, dass** ein Bereich um die mindestens eine Öffnung (3) vollständig von einem ersten Teil (6) der Befestigungseinrichtung (5) überdeckt ist.

5. Verteiler nach Anspruch 4, **dadurch gekennzeichnet, dass** der erste Teil (6) eine Schulter (12) aufweist, die die mindestens eine Öffnung (3) umgibt, wobei die Schulter (12) eine Nut (13) aufweist, in der ein O-Ring (14) angeordnet ist.

6. Verteiler nach einem der Ansprüche 1 bis 5, **dadurch gekennzeichnet, dass** die mindestens eine Öffnung eine erste Öffnung (3) ist und die Hülse mindestens eine zweite Öffnung (4) gegenüber der ersten Öffnung (3) aufweist, wobei die Befestigungseinrichtung (5) ein zweites Teil (7) aufweist und ein die zweite Öffnung (4) umgebender Bereich vollständig von dem zweiten Teil (7) abgedeckt ist.

7. Verteiler nach Anspruch 6, **dadurch gekennzeichnet, dass** der zweite Teil (7) eine die zweite Öffnung (4) umgebende Schulter (15) aufweist, wobei die Schulter (15) eine Nut (16) aufweist, in der ein O-Ring (17) angeordnet ist.

8. Verteiler nach einem der Ansprüche 1 bis 7, **dadurch gekennzeichnet, dass** mindestens ein Funktionsteil (9) des Verteilers (1) in der Befestigungseinrichtung (5) montiert ist und mittels eines in die Befestigungseinrichtung (5) eingesetzten und in eine Ausnehmung (24, 25) des Funktionsteils (9) eingreifenden U-förmigen Befestigungselements (19, 26) in der Befestigungseinrichtung (5) gehalten ist.

9. Verteiler nach Anspruch 8, **dadurch gekennzeichnet, dass** zwischen dem Funktionsteil (9) und dem Befestigungseinrichtung (5) mindestens ein O-Ring (35) angeordnet ist.

10. Verteiler nach Anspruch 8 oder 9, **dadurch gekennzeichnet, dass** das Befestigungselement (19, 26) Beine (21) aufweist, die parallel zu einer Tangente an den Umfang der Hülse (2) verlaufen.

11. Verteiler nach einem der Ansprüche 1 bis 10, **dadurch gekennzeichnet, dass** die Befestigungseinrichtung (5) in einem Bereich der Schweißnaht (8) in einer Richtung parallel zu einer Längserstreckung der Hülse (2) eine Erstreckung aufweist, die kleiner ist als in einem Bereich der Öffnung (3, 4).

12. Verteiler nach einem der Ansprüche 1 bis 11, **dadurch gekennzeichnet, dass** mindestens ein Ende der Hülse (2) eine Endöffnung bildet und ein Endteil (27, 33, 34) in die Endöffnung eingesetzt und an der Hülse (2) befestigt ist.

13. Verteiler nach Anspruch 12, **dadurch gekennzeichnet, dass** das Endteil einen O-Ring (32) aufweist und mittels eines U-förmigen Befestigungselements (29) mit zwei Beinen (30) an der Hülse befestigt ist, wobei die Beine durch Löcher (28) in der Hülse (2) geführt sind und an dem Endteil auf einer einem Innenraum der Hülse (2) gegenüberliegenden Seite des O-Rings (32) angreifen.

14. Verteiler nach einem der Ansprüche 1 bis 13, **dadurch gekennzeichnet, dass** die Befestigungseinrichtung (5) einen in die Hülse (2) hineinragenden Vorsprung (11, 18) aufweist.

15. Verteiler nach einem der Ansprüche 1 bis 14, **dadurch gekennzeichnet, dass** ein Ventilsitz (36) oder ein anderes Gegenstück des Funktionsteils (9) an einem der Teile (6, 7) der Befestigungseinrichtung (5) ausgebildet ist.

## Revendications

1. Collecteur de système de chauffage/refroidissement (1) comprenant un manchon (2) doté d'au moins une ouverture (3, 4) dans une paroi circonférentielle et d'un moyen de fixation (5) ayant une géométrie de connexion (23,24) pour fixer une pièce fonctionnelle (9) du système au manchon (2) et qui est disposé autour de l'ouverture (3, 4), **caractérisé en ce que** le manchon (2) est composé d'un matériau résistant à la chaleur et que le moyen de fixation (5) comprend au moins deux parties (6, 7) composées de matière plastique qui sont connectées par une soudure (8).

2. Collecteur selon la revendication 1, **caractérisé en ce que** la soudure (8) est disposée à l'extérieur du manchon (2) .

3. Collecteur selon la revendication 1 ou 2, **caractérisé en ce que** les parties (6, 7) du moyen de fixation (5) entourent la circonférence du manchon (2) sur plus de 200°, en particulier entourent complètement le manchon (2) .

4. Collecteur selon l'une quelconque des revendications 1 à 3, **caractérisé en ce qu'**une zone autour de l'au moins une ouverture (3) est complètement couverte par une première partie (6) du moyen de fixation (5).

5. Collecteur selon la revendication 4, **caractérisé en ce que** la première partie (6) comprend un épaulement (12) entourant l'au moins une ouverture (3), l'épaulement (12) comprenant une gorge (13) dans laquelle un joint torique (14) est disposé.

6. Collecteur selon l'une quelconque des revendications 1 à 5, **caractérisé en ce que** l'au moins une ouverture est une première ouverture (3) et que le manchon comprend au moins une seconde ouverture (4) opposée à la première ouverture (3), le moyen de fixation (5) comprenant une seconde partie (7) et une zone entourant la seconde ouverture (4) étant complètement couverte par la seconde partie (7).

7. Collecteur selon la revendication 6, **caractérisé en ce que** la seconde partie (7) comprend un épaulement (15) entourant la seconde ouverture (4), l'épaulement (15) comprenant une gorge (16) dans laquelle un joint torique (17) est disposé.

8. Collecteur selon l'une quelconque des revendications 1 à 7, **caractérisé en ce qu'**au moins une pièce fonctionnelle (9) du collecteur (1) est montée dans le moyen de fixation (5) et retenue dans le moyen de fixation (5) au moyen d'un élément de fixation en forme de U (19,26) inséré dans le moyen de fixation (5) et s'engageant dans un retrait (24,25) dans la pièce fonctionnelle (9).

9. Collecteur selon la revendication 8, **caractérisé en ce que** l'au moins un joint torique (35) est disposé entre la pièce fonctionnelle (9) et le moyen de fixation (5).

10. Collecteur selon la revendication 8 ou 9, **caractérisé en ce que** le moyen de fixation (19,26) comprend des pieds (21) qui sont parallèles à une tangente de la circonférence du manchon (2).

11. Collecteur selon l'une quelconque des revendications 1 à 10, **caractérisé en ce que**, dans une zone de la soudure (8), le moyen de fixation (5) comporte, dans un sens parallèle à une extension en longueur du manchon (2), une extension qui est plus courte que dans une zone de l'ouverture (3, 4).

12. Collecteur selon l'une quelconque des revendications 1 à 11, **caractérisé en ce qu'**au moins une extrémité du manchon (2) forme une ouverture terminale et qu'une pièce terminale (27,33,34) est insérée dans l'ouverture terminale et fixée au manchon (2).

13. Collecteur selon la revendication 12, **caractérisé en ce que** la pièce terminale comprend un joint torique (32) et est fixée au manchon au moyen d'un élément de fixation en forme de U (29) comportant deux pieds (30), les pieds étant guidés à travers des trous (28) du manchon (2) et s'engageant dans la pièce terminale sur un côté du joint torique (32) opposé à un espace intérieur du manchon (2).

14. Collecteur selon l'une quelconque des revendications 1 à 13, **caractérisé en ce que** le moyen de fixation (5) comprend une saillie (11,18) saillant dans le manchon (2) .

15. Collecteur selon l'une quelconque des revendications 1 à 14, **caractérisé en ce qu'**un siège de soupape (36) ou une autre contrepartie de la pièce fonctionnelle (9) est formé au niveau d'une des deux parties (6, 7) du moyen de fixation (5).
